# EUROPEAN PATENT APPLICATION

(11) **EP 4 783 285 A1**
(43) Date of publication of application: **29.07.2026**
(21) Application number: 24866808.9
(22) Date of filing: 29.03.2024
(51) Int. Cl.: H01M 10/0562, H01M 10/058, H01M 10/0525

(54) **ALKALI METAL-RICH NASICON-TYPE SOLID-STATE ELECTROLYTE, AND PREPARATION METHOD THEREFOR AND USE THEREOF**

(30) Priority: 22.09.2023 CN 202311225852
(71) Applicant: Tianmulake Excellent Anode Materials Co., Ltd., Liyang, Jiangsu 213330 (CN)
(72) Inventor: WANG, Shuo, hangzhou, Jiangsu 213300 (CN); ZHANG, Zijian, hangzhou, Jiangsu 213300 (CN); LIU, Bonan, hangzhou, Jiangsu 213300 (CN); LU, Hao, hangzhou, Jiangsu 213300 (CN); CHU, Geng, hangzhou, Jiangsu 213300 (CN); LUO, Fei, hangzhou, Jiangsu 213300 (CN)
(74) Representative: Glück Kritzenberger Patentanwälte PartGmbB
(86) International application number: PCT/CN2024/084648
(87) International publication number: WO 2025/060382

(57) **Abstract**

Analkali metal-rich NASICON-type solid-state electrolyte, and a preparation method therefor and a use thereof. The chemical general formula of the novel alkali metal-rich NASICON-type solid-state electrolyte is A_{1+x+y}MₓN₂₋ₓ(BO₄)₃, wherein 0≤x≤3 and 0≤y≤26; A is any one of elements Li, Na, K, Mg, and Ca; B is one or more of elements B, P, Si, S, Se, As, and Te; M is one or more of elements Al, Ga, Cd, Mn, Co, Ni, Zn, Fe, Sc, Cr, In, Y, and Ln; and N is one or more of elements Ti, Sn, Ge, Zr, Hf, V, Nb, Ta, and Sb. The alkali metal-rich NASICON-type solid-state electrolyte is obtained by adding an alkali metal activator having a particle size D₅₀ of 1 nm-10 µm to react with other raw materials in the preparation process.

## Description

The present application claims priority to the Chinese patent application No. 202311225852.6, entitled "Novel Alkali Metal-Rich NASICON-Type Solid-state Electrolyte, Preparation Method Therefor and Use Thereof", filed with the China National Intellectual Property Administration on September 22, 2023.

### BACKGROUND OF THE INVENTION

### 1. Technical Field

The present invention relates to the technical field of secondary battery materials and, in particular, to a novel alkali metal-rich NASICON-type solid-state electrolyte, a preparation method therefor and a use thereof.

### 2. Description of Related Art

In recent years, the application market has put forward increasing requirements for the safety and energy density of lithium-ion batteries. For this reason, researchers have turned more and more attention to the field of solid-state batteries, hoping to achieve comprehensive improvement in safety and energy density of batteries. Solid-state electrolytes can generally be divided into two categories: inorganic solid-state electrolytes and polymer solid-state electrolytes. NASClCON (Sodium Super Ionic Conductor)-type solid-state electrolytes A₁₊ₓMₓN₂₋ₓ(BO₄)₃, such as lithium aluminum titanium phosphate Li₁₊ₓAlₓTi₂₋ₓ(PO₄)₃ (LATP), are a class of inorganic solid-state electrolytes that have attracted much attention in recent years. NASICON-type solid-state electrolytes exhibit high ionic conductivity at room temperature, have low requirements for storage and assembly conditions, and are very stable in structure and properties in air and humid environments. Due to their high ion transfer rate, the NASICON-type solid-state electrolytes can not only be used as solid-state electrolytes, but also as cathode coating materials. The NASICON-type solid-state electrolytes can avoid direct contact between an electrolyte and a cathode material to improve cycle stability, and also enhance the lithium ion diffusion rate on the material surface, thereby further improving the rate capability and low-temperature performance. However, the use of NASICON-type solid-state electrolytes in high-voltage anodes and lithium metal and lithium metal-based composite electrodes still has serious interface problems, which restricts the further development of the NASICON-type solid-state electrolytes.

NASICON-type solid-state electrolytes have high hardness and fail in full contact when directly in contact with positive and negative active materials, resulting in high interface impedance in solid-state batteries therefrom. The discontinuous ion/electron transport channels of the solid-state electrolytes also tend to generate lithium dendrites. Moreover, when NASICON-type solid-state electrolytes come into contact with metallic lithium negative electrode and high-voltage positive electrode, redox reactions will occur. For example, metallic Li reduces Ti⁴⁺ in the electrolyte to Ti³⁺, causing the electrolyte structure to collapse and even deactivate. These problems hinder the practical application of NASICON-type solid-state electrolytes.

Therefore, it is desired to modify the NASICON-type solid-state electrolytes to enhance interface contact, reduce interface impedance, inhibit the occurrence of interface side reactions, improve interface compatibility between electrodes, and obtain a secondary battery with stable interface and excellent performance.

### BRIEF SUMMARY OF THE INVENTION

Embodiments of the present invention provide a novel alkali metal-rich NASICON-type solid-state electrolyte and a preparation method therefor and a use thereof. By adding an alkali metal-based activator during the sintering process, the transport efficiency of carriers is improved and electrochemical reaction barriers are reduced. Use of the novel alkali metal-rich NASICON-type solid-state electrolyte in secondary batteries can significantly reduce interface impedance, minimize the occurrence of side reactions at the active material interface, improve ionic conductivity and chemical stability, and simultaneously address the safety issues of current commercial batteries.

To this end, in a first aspect, an embodiment of the present invention provides a novel alkali metal-rich NASICON-type solid-state electrolyte having a chemical general formula ofA_{1+x+y}MₓN₂₋ₓ(BO₄)₃, where 0≤x≤3, and 0≤y≤26; A is any one of elements Li, Na, K, Mg, and Ca; B is one or more of elements B, P, Si, S, Se, As, and Te; M is one or more of elements Al, Ga, Cd, Mn, Co, Ni, Zn, Fe, Sc, Cr, In, Y, and Ln; and N is one or more of Ti, Sn, Ge, Zr, Hf, V, Nb, Ta, and Sb.

The novel alkali metal-rich NASICON-type solid-state electrolyte is obtained by adding an alkali metal activator with a D₅₀ particle size of 1 nm to 10 µm during a preparation process to react with other raw materials;
the alkali-metal activator includes any one of a lithium activator, a sodium activator or a potassium activator;
the lithium activator includes one or more of: LiH, Li₂S, Li₂SO₄, C₂H₅LiO, CH₃LiO, Li₂C₂O₄, a mixture of lithium-aromatic hydrocarbon-ether solvents, LiClO₄, LiSO, LiAlSO, and LiBF₄; the mixture of lithium-aromatic hydrocarbon-ether solvents includes one or more of: a lithium-biphenyl-glyme mixture, a lithium-biphenyl-tetrahydrofuran mixture, a lithium-naphthalene-tetrahydrofuran mixture, and a lithium-naphthalene-dioxolane mixture;
the sodium activator includes one or more of: NaH, Na₂O, Na₂O₂, Na₂S, NaOH, Na₂CO₃, CH₃COONa, Na₂SO₄ , NaCl, NaF, Na₃PO₄, C₂H₅NaO, CH₃NaO, Na₂C₂O₄, a mixture of sodium-aromatic hydrocarbon-ether solvents, NaAlSO, NaTFSI and NaFSI; the mixture of sodium-aromatic hydrocarbon-ether solvents includes one or more of: a sodium-naphthalene-tetrahydrofuran mixture, a sodium-naphthalene-dioxolane mixture, a sodium-naphthalene-tetrahydrofuran mixture, and a sodium-biphenyl-tetrahydrofuran mixture;
the potassium activator includes one or more of: KH, K₂O, K₂O₂, K₂S, KOH, K₂CO₃, KF, K₃PO₄, C₂H₅KO, CH₃KO, K₂C₂O₄, a mixture of potassium-aromatic hydrocarbon-ether solvents, KPF₆, KClO₄, KSO, KAlSO, KBF₄, KTFSI, and KFSI; the mixture of potassium-aromatic hydrocarbon-ether solvents includes one or more of: a potassium-naphthalene-tetrahydrofuran mixture, a potassium-naphthalene-dioxolane mixture, a potassium-biphenyl-glyme mixture, and a potassium-biphenyl-tetrahydrofuran mixture;
X-ray diffraction (XRD) measurements are performed by using a Cu-Kα target for the novel alkali metal-rich NASICON-type solid-state electrolyte, which has diffraction peaks at diffraction angles 2θ=20.8±0.5°, 22.2±0.5°, 23±0.5° and 24.5±0.5°; two weak diffraction peaks appear at diffraction angles 20 between 21.7° and 23.5 °, three characteristic peaks are present at diffraction angles 2θ=33.3±0.5°, 33.8±0.5° and 36.5±0.5° between 32° and 37 °, and a weak impurity peak is observed around 34°;
the intensities of the diffraction peaks at diffraction angles 2θ=20.8±0.5°, 22.2±0.5°, 23±0.5°, 24.5±0.5°, 33.3±0.5°, 33.8±0.5°, and 36.5±0.5° are sequentially denoted as I₁, I₂, I₃, I₄, I₅, I₆, and I₇; a peak intensity ratio of I₁: I₄ is between 0.1:1 and 1:1, a peak intensity ratio of I₂:I₃ is between 0.1:1 and 2:1, a peak intensity of I₃:I₆ is between 1:2 and 2:1, and a peak intensity of I₅:I₇ is between 1:2 and 2:1;
A main crystal structure of the novel alkali metal-rich NASICON-type solid-state electrolyte belongs to Pmnb space group and P-43n space group, of which the Pmnb space group is the dominant one.

Preferably, when x=0.3 or x=0.5, 0.5≤y≤26.

Preferably, the novel alkali metal-rich NASICON-type solid-state electrolyte presents an off-white powder appearance, with lightness L in a Lab color space satisfying 0≤ L<15.

In a second aspect, an embodiment of the present invention provides a preparation method for the novel alkali metal-rich NASICON-type solid-state electrolyte described in the first aspect above. The preparation method includes:
weighing raw materials in a stoichiometric ratio of the NASICON-type solid-state electrolyte: an A source material, a B source material, an M source material, and an N source material; and weighing an alkali metal activator;
in a protective atmosphere, feeding the raw materials and the alkali metal activator with a D₅₀ particle size of 1 nm to 10 µm into a mixer in order from the largest to the smallest particle size and mixing thoroughly to obtain a mixed material;
evenly dispersing and spreading the mixed material in a crucible, and then placing the crucible in a high-temperature furnace for first high-temperature sintering treatment in a protective atmosphere, and cooling to room temperature for the first time to obtain an intermediate material;
in a protective atmosphere, crushing and dispersing the intermediate material in a pulverizer and mixing evenly to obtain a precursor material; and
evenly dispersing and spreading the precursor material in a crucible, placing the crucible in a high-temperature furnace for second sintering treatment in a protective atmosphere, and then cooling to room temperature for the second time, and crushing and sieving a resulting material to obtain the novel alkali metal-rich NASICON-type solid-state electrolyte.

The A source material includes one or more of: Li₂O, Li₂O₂, LiOH, Li₂CO₃, CH₃COOLi, LiNO₃, LiPF₆, LiAsF₆, LiBF₄, LiFSI, LiTFSI, LiCF₃SO₃, LiCF₃SO₃·LiOAc, LiC₂H₃O₂, LiCl, LiF, Li₃PO₄, lithium bis-oxalate borate (LiBOB), lithium difluoro-oxalate borate (LiDFOB), Li₂B₄O₇, NaPF₆, NaClO₄, NaAlClh, NaFeClh, NaSO, NaBF₄, NaNO₃, NaPOFA, KCl, KNO₃, KH₂PO₄, K₂SO₄, and CH₃COOK;
the B source material includes one or more of: H₂PO₄, NH₂H₂PO₄, (NH₂)₂HPO₄, SiO₂, SiH₄, CH₃SiH₃, CS₂, P₂S₃, SeO₂, and CdSe;
the M source material includes one or more of:Al₂O₃, Al(OH)₃, AlOOH, Al₂(CO₃)₃, C₉H₂₁AlO₃, Al(NO₃)₃·9H₂O, Al[OOCH₃(OH)₂]·xH₂O, GaCl₃, GaBr₃, GaI₃, Ga(NO₃)₃, and Ga₂(SO₄)₃;
the N source material includes one or more of: TiCl₄, Ti(NO₃)₄, isobutyl titanate (IPT), dibutyl titanate (DBTDP), tetrabutyl titanate (TBT), C₁₆H₃₆O₄Ti, Ti(n-C₃H₇O)₄, Ti(OC₄H₉)₄, ZrO₂, ZrSiO₄, ZrSO₄, ZrOCl₂, ZrC, ZrCO₃, ZrB, and ZrB₂;
the alkali-metal activator includes any one of a lithium activator, a sodium activator or a potassium activator; the lithium activator includes one or more of: LiH, Li₂S, Li₂SO₄, C₂H₅LiO, CH₃LiO, Li₂C₂O₄, a mixture of lithium-aromatic hydrocarbon-ether solvents, LiClO₄, LiSO, LiAlSO, and LiBF₄; the mixture of lithium-aromatic hydrocarbon-ether solvents includes one or more of: a lithium-biphenyl-glyme mixture, a lithium-biphenyl-tetrahydrofuran mixture, a lithium-naphthalene-tetrahydrofuran mixture, and a lithium-naphthalene-dioxolane mixture;
the sodium activator includes one or more of: NaH, Na₂O, Na₂O₂ , Na₂S, NaOH, Na₂CO₃, CH₃COONa, Na₂SO₄ , NaCl, NaF, Na₃PO₄, C₂H₅NaO, CH₃NaO, Na₂C₂O₄, a mixture of sodium-aromatic hydrocarbon-ether solvents, NaAlSO, NaTFSI and NaFSI; the mixture of sodium-aromatic hydrocarbon-ether solvents includes one or more of: a sodium-naphthalene-tetrahydrofuran mixture, a sodium-naphthalene-dioxolane mixture, a sodium-naphthalene-tetrahydrofuran mixture, and a sodium-biphenyl-tetrahydrofuran mixture;
the potassium activator includes one or more of: KH, K₂O, K₂O₂, K₂S, KOH, K₂CO₃, KF, K₃PO₄, C₂H₅KO, CH₃KO, K₂C₂O₄, a mixture of potassium-aromatic hydrocarbon-ether solvents, KPF₆, KClO₄, KSO, KAlSO, KBF₄, KNO₃, KTFSI, and KFSI; the mixture of potassium-aromatic hydrocarbon-ether solvents includes one or more of: a potassium-naphthalene-tetrahydrofuran mixture, a potassium-naphthalene-dioxolane mixture, a potassium-biphenyl-glyme mixture, and a potassium-biphenyl-tetrahydrofuran mixture;
the conditions for the first high-temperature sintering treatment are: heating to a temperature between 500°C and 850°C at a heating rate of 1°C/min to 3°C/min, and holding the temperature for 4 hours to 7 hours; the conditions for the second sintering treatment are: heating to a temperature between 300°C and 650°C at a heating rate of 1°C/min to 3°C/min, and holding the temperature for 2 hours to 6 hours.

Preferably, the alkali metal activator has a D₅₀ particle size of 1 nm to 10 µm; a molar ratio of the NASICON-type solid-state electrolyte to the alkali metal activator is within a range of [1:0.5] to [1:6.5].

Preferably, the protective atmospheres include one or more of nitrogen, argon, hydrogen, helium or neon.

The mixer is a high-speed disperser, with a stirring speed ranging from 1500 rpm to 5000 rpm. The mixing thoroughly includes: stirring for 20 min to 60 min after each feeding, and after the final feeding, stirring for 1 hour to 3 hours.

The cooling to room temperature for the first time and the cooling to room temperature for the second time are both performed at a cooling rate of 1°C/min to 5°C/min.

In a third aspect, an embodiment of the present invention provides a use of the novel alkali metal-rich NASICON-type solid-state electrolyte described in the first aspect above. The novel alkali metal-rich NASICON-type solid-state electrolyte is used in one or more of an electrolyte, a separator, a positive material additive, an negative material additive, and an electrolyte additive.

In a fourth aspect, an embodiment of the present invention provide a secondary battery, including one or more of the electrolyte, separator, positive material additive, negative material additive, and electrolyte additive described in the third aspect above.

Preferably, the secondary battery includes any one of a lithium-ion battery, a sodium-ion battery and a potassium-ion battery.

The present invention provides a novel alkali metal-rich NASICON-type solid-state electrolyte, a preparation method therefor and a use thereof. Different from the known microscopic aliovalent element doping, the solution of the present invention achieves bulk phase activation by introducing lithium salts/sodium salts/potassium salts, thereby destroying the original local crystal structure. Driven by the chemical potential, the activator introduces a new crystal lattice structure at a macro scale into the known NASICON-type solid-state electrolyte structure. The characteristics of the new lattice structure endow the novel alkali metal-rich NASICON-type solid-state electrolyte with high ion/electron transport performance and excellent interface stability. Introducing the activator from the raw material end of the NASICON-type solid-state electrolyte can be highly compatible with the known typical high-temperature solid phase synthesis process route, thereby greatly reducing the manufacturing cost of the new material. Due to ultrahigh room-temperature ion transport function and interface stability, when used as one or more of an electrolyte, a separator, a positive electrode material additive, an negative electrode material additive or an electrolyte additive in a secondary battery, the novel alkali metal-rich NASICON-type solid-state electrolyte can significantly reduce the interface impedance of the secondary battery, enhance the transport efficiency of carriers, and improve the cycle stability of the secondary battery.

The present invention provides a preparation method for a novel alkali metal-rich NASICON-type solid-state electrolyte, which is simple to operate, is highly integrated with a known preparation process for alkali metal-rich NASICON-type solid-state electrolytes, has low production cost, and can be put into large-scale production easily.

### BRIEF DESCRIPTION OF THE SEVERAL VIEWS OF THE DRAWINGS

The technical solutions of the embodiments of the present invention will be described in further detail below in conjunction with the drawings and embodiments.
FIG. 1 shows a flow chart of a preparation method of a novel alkali metal-rich NASICON-type solid-state electrolyte in an embodiment of the present invention.
FIG. 2 shows a physical photo of a novel alkali metal-rich NASICON-type solid-state electrolyte prepared in embodiment 1 of the present invention.
FIG. 3 shows X-ray diffraction (XRD) patterns of the novel alkali metal-rich NASICON-type solid-state electrolyte prepared in embodiment 1 of the present invention and a known NASICON-type solid-state electrolyte prepared in Comparative Example 1.
FIG. 4 shows schematic diagrams of the space group structure of the novel alkali metal-rich NASICON-type solid-state electrolyte prepared in embodiment 1 of the present invention.
FIG. 5 shows a comparative electrochemical impedance spectroscopy (EIS) plot of all-solid-state lithium-ion batteries assembled from the novel alkali metal-rich NASICON-type solid-state electrolyte prepared in embodiment 1 of the present invention and from the known NASICON-type solid-state electrolyte prepared in Comparative Example 1.
FIG. 6 shows a cyclic capacity curve of the all-solid-state lithium-ion battery assembled from the novel alkali metal-rich NASICON-type solid-state electrolyte prepared in embodiment 1 of the present invention.
FIG. 7 shows an XRD pattern of a novel alkali metal-rich NASICON-type solid-state electrolyte prepared in embodiment 2 of the present invention.
FIG. 8 shows an XRD pattern of a novel alkali metal-rich NASICON-type solid-state electrolyte prepared in embodiment 3 of the present invention.
FIG. 9 shows an XRD pattern of a novel alkali metal-rich NASICON-type solid-state electrolyte prepared in embodiment 4 of the present invention.
FIG. 10 shows an XRD pattern of a novel alkali metal-rich NASICON-type solid-state electrolyte prepared in embodiment 5 of the present invention.
FIG. 11 shows an XRD pattern of a novel alkali metal-rich NASICON-type solid-state electrolyte prepared in embodiment 6 of the present invention.

### DETAILED DESCRIPTION OF THE INVENTION

The present invention will be described in further detail below in conjunction with the drawings and specific embodiments, but it should be understood that these embodiments are only for more detailed explanation and should not be understood as limiting the present invention in any way. In other words, these embodiments are not intended to limit the scope of the present invention.

An embodiment of the present invention provides a novel alkali metal-rich NASICON-type solid-state electrolyte, which is obtained by adding an alkali metal activator with a D₅₀ particle size of 1 nm to 10 µm during a preparation process to react with other raw materials; the alkali-metal activator includes any one of a lithium activator, a sodium activator or a potassium activator; the main crystal structure of the novel alkali metal-rich NASICON-type solid-state electrolyte belongs to Pmnb space group and P-43n space group, of which the Pmnb space group is the dominant one; the novel alkali metal-rich NASICON-type solid-state electrolyte presents an off-white powder appearance, with the lightness L in the Lab color space satisfying 0≤ L<15.

The novel alkali metal-rich NASICON-type solid-state electrolyte has a chemical general formula of A_{1+x+y}MₓN₂₋ₓ(BO₄)₃, where 0≤x≤3, and 0≤y≤26; preferably, when x=0.3 or x=0.5, 0.5≤y≤26; A is any one of elements Li, Na, K, Mg, and Ca; B is one or more of elements B, P, Si, S, Se, As, and Te; M is one or more of elements Al, Ga, Cd, Mn, Co, Ni, Zn, Fe, Sc, Cr, In, Y, and Ln; and N is one or more of Ti, Sn, Ge, Zr, Hf, V, Nb, Ta, and Sb.

In X-ray diffraction (XRD) measurements using a Cu-Ka target, the novel alkali metal-rich NASICON-type solid-state electrolyte provided in an embodiment of the present invention has diffraction peaks at diffraction angles 2θ=20.8±0.5°, 22.2±0.5°, 23±0.5° and 24.5±0.5°.

Two weak diffraction peaks appear at diffraction angles 20 between 21.7° and 23.5 °, three characteristic peaks are present at diffraction angles 2θ=33.3±0.5°, 33.8±0.5° and 36.5±0.5° between 32° and 37 °, and a weak impurity peak is observed around 34°.

The intensities of the diffraction peaks at diffraction angles 2θ=20.8±0.5°, 22.2±0.5°, 23±0.5°, 24.5±0.5° , 33.3±0.5°, 33.8±0.5° and 36.5±0.5° are sequentially denoted as I₁, I₂, I₃, I₄, I₅, I₆, and I₇; a peak intensity ratio of I₁:I₄ is between 0.1:1 and 1:1, a peak intensity ratio of I₂:I₃ is between 0.1:1 and 2:1, a peak intensity of I₅:I₆ is between 1:2 and 2:1, and a peak intensity of I₅:I₇ is between 1:2 and 2:1.

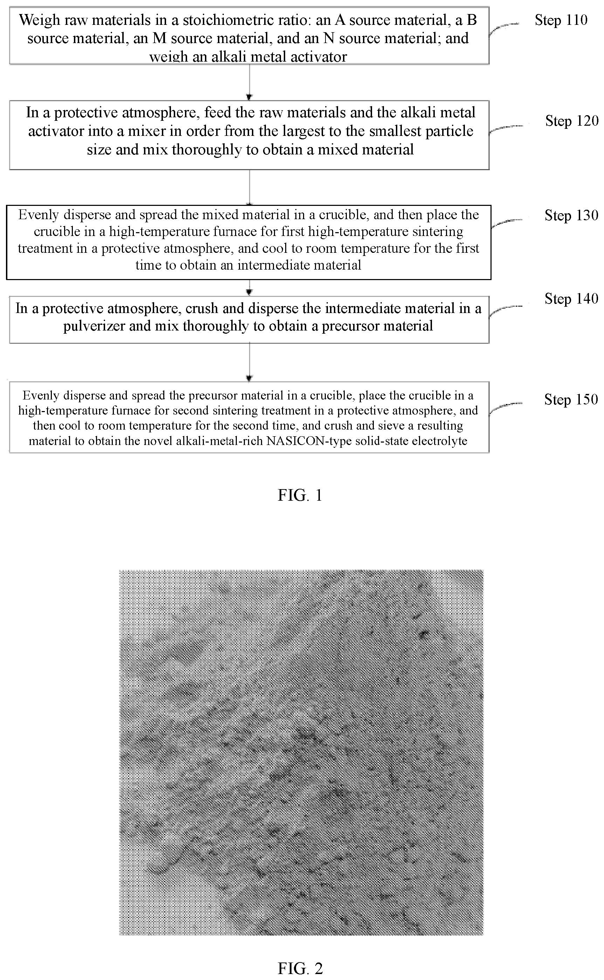

An embodiment of the present invention provides a preparation method for the novel alkali metal-rich NASICON-type solid-state electrolyte described above. As shown in FIG. 1, the preparation method includes the following steps.

In step 110, raw materials are weighed in a stoichiometric ratio of the NASICON-type solid-state electrolyte: an A source material, a B source material, an M source material, and an N source material; and an alkali metal activator is weighed.

The A source material includes but is not limited to one or more of: Li₂O, Li₂O₂, LiOH, Li₂CO₃, CH₃COOLi, LiNO₃, LiPF₆, LiAsF₆, LiBF₄, LiFSI, LiTFSI, LiCF₃SO₃, LiCF₃SO₃·LiOAc, LiC₂H₃O₂, LiCl, LiF, Li₃PO₄, lithium bis-oxalate borate (LiBOB), lithium difluoro-oxalate borate (LiDFOB), Li₂B₄O₇, NaPF₆, NaClO₄, NaAlClh, NaFeClh, NaSO, NaBF₄, NaNO₃, NaPOFA, KCl, KNO₃, KH₂PO₄, K₂SO₄, and CH₃COOK.

The B source material includes but is not limited to one or more of: H₂PO₄, NH₂H₂PO₄, (NH₂)₂HPO₄, SiO₂, SiH₄, CH₃SiH₃, CS₂, P₂S₃, SeO₂, and CdSe.

The M source material includes but is not limited to one or more of: Al₂O₃, Al(OH)₃, AlOOH, Al₂(CO₃)₃, C₉H₂₁AlO₃, Al(NO₃)₃·9H₂O, Al[OOCH₃(OH)₂]·xH₂O, GaCl₃, GaBr₃, GaI₃, Ga(NO₃)₃, and Ga₂(SO₄).

The N source material includes but is not limited to one or more of: TiCl₄, Ti(NO₃)₄, isobutyl titanate (IPT), dibutyl titanate (DBTDP), tetrabutyl titanate (TBT), C₁₆H₃₆O₄Ti, Ti(n-C₃H₇O)₄, Ti(OC₄H₉)₄, ZrO₂, ZrSiO₄, ZrSO₄, ZrOCl₂, ZrC, ZrCO₃, ZrB, and ZrB₂.

The alkali-metal activator includes any one of a lithium activator, a sodium activator or a potassium activator; the lithium activator includes but is not limited to one or more of: LiH, Li₂S, Li₂SO₄, C₂H₅LiO, CH₃LiO, Li₂C₂O₄, a mixture of lithium-aromatic hydrocarbon-ether solvents, LiClO₄, LiSO, LiAlSO, and LiBF₄; the mixture of lithium-aromatic hydrocarbon-ether solvents includes one or more of: a lithium-biphenyl-glyme mixture, a lithium-biphenyl-tetrahydrofuran mixture, a lithium-naphthalene-tetrahydrofuran mixture, and a lithium-naphthalene-dioxolane mixture.

The sodium activator includes but is not limited to one or more of: NaH, Na₂O, Na₂O₂, Na₂S, NaOH, Na₂CO₃, CH₃COONa, Na₂SO₄, NaCl, NaF, Na₃PO₄, C₂H₅NaO, CH₃NaO, Na₂C₂O₄, a mixture of sodium-aromatic hydrocarbon-ether solvents, NaAlSO, NaTFSI and NaFSI; the mixture of sodium-aromatic hydrocarbon-ether solvents includes one or more of: a sodium-naphthalene-tetrahydrofuran mixture, a sodium-naphthalene-dioxolane mixture, a sodium-naphthalene-tetrahydrofuran mixture, and a sodium-biphenyl-tetrahydrofuran mixture.

The potassium activator includes but is not limited to one or more of: KH, K₂O, K₂O₂, K₂S, KOH, K₂CO₃, KF, K₃PO₄, C₂H₅KO, CH₃KO, K₂C₂O₄, a mixture of potassium-aromatic hydrocarbon-ether solvents, KPF₆, KClO₄, KSO, KAlSO, KBF₄, KNO₃, KTFSI, and KFSI; the mixture of potassium-aromatic hydrocarbon-ether solvents includes one or more of: a potassium-naphthalene-tetrahydrofuran mixture, a potassium-naphthalene-dioxolane mixture, a potassium-biphenyl-glyme mixture, and a potassium-biphenyl-tetrahydrofuran mixture.

The alkali metal activator has a D₅₀ particle size of 1 nm to 10 µm.

The molar ratio of the NASICON-type solid-state electrolyte to the alkali metal activator is within a range of [1 :0.5] to [1:6.5]. The molar ratio may be any molar ratio within this range and may be, for example, 1:0.5, 1:0.6, 1:0.8, 1:1, 1:1.5, 1:2, 1:2.5, 1:3, 1:3.5, 1:4, 1:4.5, 1:5, 1:5.5, 1:6.5, etc. However, the molar ratio is not limited to the listed values, and other unlisted values within this range are also applicable.

In step 120, in a protective atmosphere, the raw materials and the alkali metal activator with a D₅₀ particle size of 1 nm to 10 µm are fed into a mixer in order from the largest to the smallest particle size and mixed thoroughly to obtain a mixed material.

The mixer is a high-speed disperser, with a stirring speed ranging from 1500 rpm to 5000 rpm. The mixing thoroughly is specifically implemented by: stirring for 20 min to 60 min after each feeding, and after the final feeding, stirring for 1 hour to 3 hours.

In the present invention, better reaction effects can be achieved by feeding the raw materials and the alkali metal activator in the order from the largest to the smallest particle size.

In step 130, the mixed material is evenly dispersed and spread in a crucible, and the crucible is then placed in a high-temperature furnace for first high-temperature sintering treatment in a protective atmosphere, and then the sintered material is cooled to room temperature for the first time to obtain an intermediate material.

The conditions for the first high-temperature sintering treatment are: heating to a temperature between 500°C and 850 °C at a heating rate of 1°C/min to 3°C/min, and holding the temperature for 4 hours to 7 hours. The cooling to room temperature for the first time is performed at a cooling rate of 1°C/min to 5°C/min.

In step 140, in a protective atmosphere, the intermediate material is crushed and dispersed in a pulverizer and then mixed thoroughly to obtain a precursor material.

The pulverizer is a jaw crusher and/or a double roll crusher.

The obtained precursor material has a D₅₀ particle size of 100 nm to 10 µm.

In step 150, the precursor material are evenly dispersed and spread in a crucible, the crucible is then placed in a high-temperature furnace for second sintering treatment in a protective atmosphere, and then the sintered material is cooled to room temperature for the second time, and the resulting material is crushed and sieved to obtain the novel alkali metal-rich NASICON-type solid-state electrolyte.

The conditions for the second sintering treatment are: heating to a temperature between 300°C and 650°C at a heating rate of 1°C/min to 3°C/min, and holding the temperature for 2 hours to 6 hours. The cooling to room temperature for the second time is performed at a cooling rate of 1°C/min to 5°C/min.

In the above-described preparation method provided by the embodiments of the present invention, all the protective atmospheres mentioned are one or more of nitrogen, argon, hydrogen, helium or neon.

In the present invention, the D₅₀ particle size of the alkali-metal activator is in the range of 1 nm to 10 µm, and may be any specific value within the aforementioned range. The D₅₀ particle size of the alkali-metal activator may be, for example, 1 nm, 10 nm, 20 nm, 50 nm, 70 nm, 100 nm, 200 nm, 500 nm, 1 µm, 2 µm, 10 µm, etc. However, the D₅₀ particle size of the alkali-metal activator is not limited to the listed values, and other unlisted values within this range are also applicable.

The novel alkali metal-rich NASICON-type solid-state electrolyte of the present invention is obtained by adding an alkali metal activator with a D₅₀ particle size of 1 nm to 10 µm during the preparation process to react with other raw materials. The mechanism is as follows: the known NASICON-type solid-state electrolyte A₁₊ₓMₓN₂₋ₓ(BO₄)₃ has a hexagonal triclinic structure and unstable redox performance, which is determined by its crystalline structure. AO₄ and MO₆ form a three-dimensional framework with shared vertices, where A atoms occupy A1 and A2 sites, and ions achieve particle conduction by jumping between the two sites. To address the above issues, an alkali metal activator with a D₅₀ particle size of 1 nm to 10 µm is introduced. During the preparation of the novel alkali metal-rich NASICON-type solid-state electrolyte, the alkali metal ions in the alkali metal activator fill the vacancy defects around AO₄, increase local structural distortion, and improve the density of A atom sites, thereby significantly enhancing the performance of ionic and electronic transport, and effectively reducing the redox driving force caused by chemical potential; meanwhile, the contact resistance formed by the interface structure is further reduced.

The novel alkali metal-rich NASICON-type solid-state electrolyte prepared by the above preparation method of the present invention can be used in a secondary battery as one or more of an electrolyte, a separator, a cathode material additive, an anode material additive, or an electrolyte additive. The secondary battery includes any one of a lithium-ion battery, a sodium-ion battery, and a potassium-ion battery. For the secondary battery using the novel alkali metal-rich NASICON-type solid-state electrolyte of the present invention, the interface impedance of the secondary battery is significantly reduced, the transport efficiency of carriers is enhanced, and the cycle stability of the secondary battery is improved.

To better understand the technical solutions of the present invention, the preparation process and characteristics of the novel alkali metal-rich NASICON-type solid-state electrolyte of the present invention are illustrated below by way of multiple embodiment.

### Embodiment 1

This example provides the preparation process and performance test of a novel alkali metal-rich NASICON-type solid-state electrolyte, and the specific preparation process is as follows.
(1) The following raw materials were weighed in a stoichiometric ratio of the NASICON-type solid-state electrolyte Li_{1.3}Al_{0.3}Ti_{1.7}(PO₄)₃: an A source material Li₂SO₄, a B source material (NH₂)₂HPO₄, an M source material Al(OH)₃, and an N source material C₁₆H₃₆O₄Ti; and an alkali metal activator LiOH was weighed.
   The D₅₀ particle size of Li₂SO₄ was 50 µm, the D₅₀ particle size of (NH₂)₂HPO₄ was 20 nm, the D₅₀ of Al(OH)₃ was 10 µm, the D₅₀ particle size of C₁₆H₃₆O₄Ti was 100 nm, and the D₅₀ particle size of LiOH was 10 nm. The molar ratio of the NASICON-type solid-state electrolyte Li_{1.3}Al_{0.3}Ti_{1.7}(PO₄) to LiOH was [1:6.5].
(2) In a nitrogen atmosphere, the raw materials and the alkali metal activator which were weighed in step (1) were fed into a high-speed disperser with a stirring speed of 1500 rpm in order from the largest to the smallest particle size and mixed thoroughly to obtain a mixed material, where the materials were stirred for 20 minutes after each feeding, and after the final feeding, the materials were stirred for 1 hour.
(3) The mixed material was evenly dispersed and spread in a crucible, and the crucible was then placed in a high-temperature furnace for first high-temperature sintering treatment in a nitrogen atmosphere, where the mixed material was heated to 600°C at a heating rate of 3°C/min and held at the temperature for 5 hours; then, the sintered material was cooled to room temperature at a cooling rate of 3°C/min to obtain an intermediate material.
(4) In a nitrogen atmosphere, the intermediate material was crushed and dispersed in a double roll crusher and then mixed thoroughly to obtain a precursor material with a D₅₀ particle size of 100 nm.
(5) The precursor material was evenly dispersed and spread in a crucible, and the crucible was placed in a high-temperature furnace for second sintering treatment in a nitrogen atmosphere, where the precursor material was heated to 300°C at a heating rate of 3°C/min and held at the temperature for 2 hours; then, the sintered material was cooled to room temperature at a cooling rate of 3°C/min, and then crushed and sieved to obtain an off-white novel alkali metal-rich NASICON-type solid-state electrolyte Li_{7.8}Al_{0.3}Ti_{1.7}(PO₄)₃ with a D₅₀ particle size of 100 nm.

The physical photo of the novel alkali metal-rich NASICON-type solid-state electrolyte Li_{7.8}Al_{0.3}Ti_{1.7}(PO₄)₃ prepared in embodiment 1 is as shown in FIG. 2, from which it can be seen that the prepared material is an off-white powder.

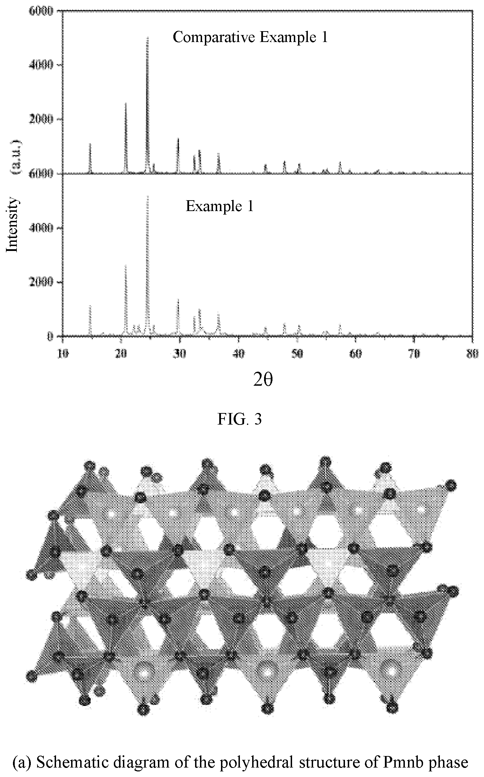

The XRD pattern of the novel alkali metal-rich NASICON-type solid-state electrolyte Li_{7.8}Al_{0.3}Ti_{1.7}(PO₄)₃ prepared in Example 1 is as shown in FIG. 3. X-ray diffraction (XRD) measurements were performed using a Cu-Kα target, having diffraction peaks at diffraction angles 2θ=20.8°, 22.2°, 23°, and 24.5°, characteristic peaks at diffraction angles 2θ=33.3°, 33.8°, and 36.5°, and a weak impurity peak around 34°.

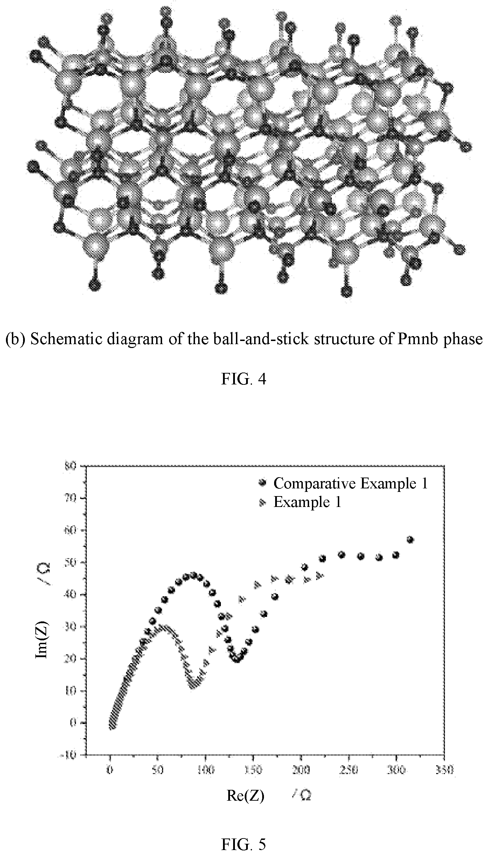

The main crystal structure of the novel alkali metal-rich NASICON-type solid-state electrolyte Li_{7.8}Al_{0.3}Ti_{1.7}(PO₄)₃prepared in embodiment 1 belongs to the Pmnb space group, including the polyhedral structure and ball-and-stick structure of the Pmnb phase, which are as schematically illustrated in FIG. 4(a) and FIG. 4(b), respectively.

A lithium-ion all-solid-state battery was assembled using the novel alkali metal-rich NASICON-type solid-state electrolyte prepared in this example via a conventional method. The battery configuration consisted of lithium cobalt oxide as a positive electrode, metallic lithium as an negative electrode, and the novel alkali metal-rich NASICON-type solid-state electrolyte Li_{7.8}Al_{0.3}Ti_{1.7}(PO₄)₃ as an electrolyte layer. Test conditions: charge-discharge current of 0.1 A/g, charge cut-off voltage of 4.2 V, and discharge cut-off voltage of 2 V.

The electrochemical impedance spectroscopy (EIS) plot of the lithium-ion all-solid-state battery assembled in this embodimentis as shown in FIG. 5.

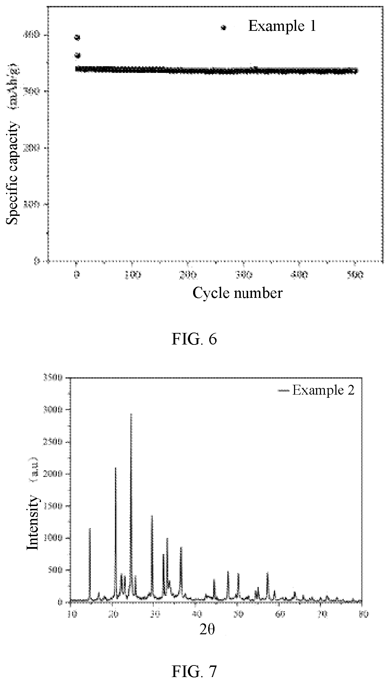

The cycle capacity curve of the lithium-ion all-solid-state battery assembled in this embodiment eis as shown in FIG. 6, indicating that the lithium-ion all-solid-state battery exhibits stable cycling performance.

Detailed test data of the lithium-ion all-solid-state battery assembled in this example are summarized in Table 1.

### Embodiment 2

This embodimentprovides the preparation process and performance test of a novel alkali metal-rich NASICON-type solid-state electrolyte, and the preparation process is as follows.
(1) The following raw materials were weighed in a stoichiometric ratio of the NASICON-type solid-state electrolyte Li_{1.3}Ga_{0.3}Ti_{1.3}(SiO₄)₃ : an A source material LiFSI, a B source material SiO₂, an M source material Ga₂(SO₄)₃, and an N source material dibutyl titanate (DBTDP); and an alkali metal activator Li₂O₂ was weighed.
   The D₅₀ particle size of LiFSI was 30 µm, the D₅₀ particle size of SiO₂ was 20 nm, the D₅₀ particle size of Ga₂(SO₄)₃ was 50 µm, the D₅₀ particle size of DBTDP was 100 nm, and the D₅₀ particle size of Li₂O₂was 50 nm. The molar ratio of the NASICON-type solid-state electrolyte Li_{1.3}Ga_{0.3}Ti_{1.3}(SiO₄)₃ to Li₂O₂ was [1:0.5].
(2) In a nitrogen atmosphere, the raw materials and the alkali metal activator which were weighed in step (1) were fed into a high-speed disperser with a stirring speed of 2000 rpm in order from the largest to the smallest particle size and mixed thoroughly to obtain a mixed material, where the materials were stirred for 30 min after each feeding, and after the final feeding, the materials were stirred for 1.5 hours.
(3) The mixed material was evenly dispersed and spread in a crucible, and the crucible was then placed in a high-temperature furnace for first high-temperature sintering treatment in a nitrogen atmosphere, where the mixed material was heated to 500°C at a heating rate of 5°C/min and held at the temperature for 6 hours; then, the sintered material was cooled to room temperature at a cooling rate of to 5°C/min obtain an intermediate material.
(4) In a nitrogen atmosphere, the intermediate material was crushed and dispersed in a double roll crusher and then mixed evenly to obtain a precursor material with a D₅₀ particle size of 100 nm.
(5) The precursor material was evenly dispersed and spread in a crucible, and the crucible was placed in a high-temperature furnace for second sintering treatment in a nitrogen atmosphere, where the precursor material was heated to 400°C at a heating rate of 2°C/min and held at the temperature for 3 h; then, the sintered material was cooled to room temperature at a cooling rate of 2°C/min, and then crushed and sieved to obtain an off-white novel alkali metal-rich NASICON-type solid-state electrolyte Li_{2.5}Ga_{0.5}Ti_{1.5}(SiO₄)₃ with a D₅₀ particle size of 100 nm.

The XRD pattern of the novel alkali metal-rich NASICON-type solid-state electrolyte Li_{2.5}Ga_{0.3}Ti_{1.3}(SiO₄)₃ prepared in this embodimentis as shown in FIG. 7. X-ray diffraction (XRD) measurements were performed using a Cu-Kα target, revealing diffraction peaks at diffraction angles 2θ=20.8°, 22.4°, 23.3°, and 24.5°, characteristic peaks at diffraction angles 2θ=33.5°, 33.9° and 36.5°, and a weak impurity peak around 34°.

A lithium-ion all-solid-state battery was assembled using the novel alkali metal-rich NASICON-type solid-state electrolyte prepared in this embodimentvia a conventional method and then tested in the same way as embodiment1. Detailed test data are summarized in Table 1.

### Embodiment3

This embodimentprovides the preparation process and performance test of a novel alkali metal-rich NASICON-type solid-state electrolyte, and the preparation process is as follows.
(1) The following raw materials were weighed in a stoichiometric ratio of the NASICON-type solid-state electrolyte Li_{1.3}Al_{0.3}Ge_{1.3}(PO₄)₃: an A source material LiH, a B source material (NH₂)₂HPO₄, an M source material Al(NO₃)₃·9H₂O, and an N source material GeCl₄; and an alkali metal activator NaClO₄ was weighed.
   The D₅₀ particle size of LiH was 30 µm, the D₅₀ particle size of (NH₂)₂HPO₄ was 20 nm, the D₅₀ particle size of Al(NO₃)₃·9H₂O was 50 µm, the D₅₀ particle size of GeCl₄ was 100 nm, and the D₅₀ particle size of NaClO₄ was 50 nm. The molar ratio of the NASICON-type solid-state electrolyte Li_{1.3}Al_{0.3}Ge_{1.3}(PO₄)₃ to NaClO₄ was [1:2.5].
(2) In an argon atmosphere, the raw materials and the alkali metal activator which were weighed in step (1) were fed into a high-speed disperser with a stirring speed of 1500 rpm in order from the largest to the smallest particle size and mixed thoroughly to obtain a mixed material, where the materials were stirred for 20 min after each feeding, and after the final feeding, the materials were stirred for 1 hour.
(3) The mixed material was evenly dispersed and spread in a crucible, and the crucible was then placed in a high-temperature furnace for first high-temperature sintering treatment in an argon atmosphere, where the mixed material was heated to 650°C at a heating rate of 3°C/min and held at the temperature for 5 hours; then, the sintered material was cooled to room temperature at a cooling rate of 3°C/min to obtain an intermediate material.
(4) In an argon atmosphere, the intermediate material was crushed and dispersed in a double roll crusher and then mixed evenly to obtain a precursor material with a D₅₀ particle size of 100 nm.
(5) The precursor material was evenly dispersed and spread in a crucible, and the crucible was placed in a high-temperature furnace for second sintering treatment in an argon atmosphere, where the precursor material was heated to 300°C at a heating rate of 3°C/min and held at the temperature for 2 hours; then, the sintered material was cooled to room temperature at a cooling rate of 3°C/min, and then crushed and sieved to obtain an off-white novel alkali metal-rich NASICON-type solid-state electrolyte Li_{1.3}Na_{2.5}Al_{0.3}Ge_{1.3}(PO₄)₃ with a D₅₀ particle size of 100 nm.

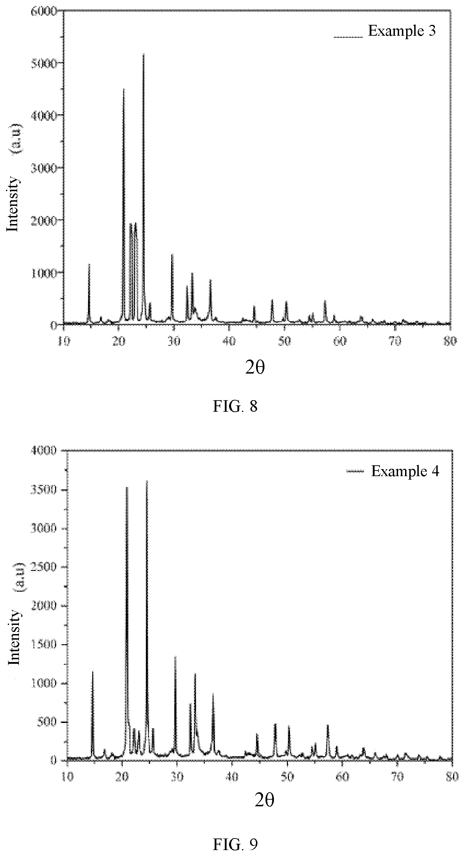

The XRD pattern of the novel alkali metal-rich NASICON-type solid-state electrolyte Li_{1.5}Na_{2.5}Al_{0.3}Ge_{1.3}(PO₄)₃prepared in this embodiment is as shown in FIG. 8. X-ray diffraction (XRD) measurements were performed using a Cu-Kα target, revealing diffraction peaks at diffraction angles 2θ=20.4°, 22.3°, 23.3° and 24.6°, characteristic peaks at diffraction angles 2θ=33.4°, 33.6° and 36.8°, and a weak impurity peak around 34°.

A lithium-ion all-solid-state battery was assembled using the novel alkali metal-rich NASICON-type solid-state electrolyte prepared in this embodimentvia a conventional method and then tested in the same way as embodiment1. Detailed test data are summarized in Table 1.

### embodiment4

This embodimentprovides the preparation process and performance test of a novel alkali metal-rich NASICON-type solid-state electrolyte, and the preparation process is as follows.
(1) The following raw materials were weighed in a stoichiometric ratio of the NASICON-type solid-state electrolyte Li_{1.3}Al_{0.3}Ti_{1.7}(PO₄)₃: an A source material Li₂SO₄, a B source material (NH₂)₂HPO₄, an M source material Al(OH)₃, and an N source material TiO₂; and an alkali metal activator LiOH was weighed.
   The D₅₀ particle size of LiOH was 200 nm. The molar ratio of the NASICON-type solid-state electrolyte Li_{1.3}Al_{0.3}Ti_{1.7}(PO₄)₃ to LiOH was [1:6.5].
(2) In a nitrogen atmosphere, the raw materials and the alkali metal activator which were weighed in step (1) were fed into a high-speed disperser with a stirring speed of3000 rpm in order from the largest to the smallest particle size and mixed evenly to obtain a mixed material, where the materials were stirred for 30 min after each feeding, and after the final feeding, the materials were stirred for 2 hours.
(3) The mixed material was evenly dispersed and spread in a crucible, and the crucible was then placed in a high-temperature furnace for first high-temperature sintering treatment in a nitrogen atmosphere, where the mixed material was heated to 600°C at a heating rate of 1°C/min and held at the temperature for 6 h; then, the sintered material was cooled to room temperature at a cooling rate of 3°C/min to obtain an intermediate material.
(4) In a nitrogen atmosphere, the intermediate material was crushed and dispersed in a double roll crusher and then mixed thoroughly to obtain a precursor material with a D₅₀ particle size of 100 nm.
(5) The precursor material was evenly dispersed and spread in a crucible, and the crucible was placed in a high-temperature furnace for second sintering treatment in a nitrogen atmosphere, where the precursor material was heated to 500°C at a heating rate of 1°C/min and held at the temperature for 4 h; then, the sintered material was cooled to room temperature at a cooling rate of 2°C/min, and then crushed and sieved to obtain an off-white novel alkali metal-rich NASICON-type solid-state electrolyte Li_{7.8}Al_{0.3}Ti_{1.7}(PO₄)₃ with a D₅₀ particle size of 100 nm.

The XRD pattern of the novel alkali metal-rich NASICON-type solid-state electrolyte Li_{7.8}Al_{0.3}Ti_{1.7}(PO₄)₃ prepared in this embodimentis as shown in FIG. 9. X-ray diffraction (XRD) measurements were performed using a Cu-Kα target, having diffraction peaks at diffraction angles 2θ=20.5°, 22.6°, 23.2°, and 24.4°, characteristic peaks at diffraction angles 2θ=33.5°, 33.6° and 36.9°, and a weak impurity peak around 34°.

A lithium-ion all-solid-state battery was assembled using the novel alkali metal-rich NASICON-type solid-state electrolyte prepared in this embodimentvia a conventional method and then tested in the same way as embodiment1. Detailed test data are summarized in Table 1.

### Embodiment5

This embodimentprovides the preparation process and performance test of a novel alkali metal-rich NASICON-type solid-state electrolyte, and the specific preparation process is as follows.
(1) The following raw materials were weighed in a stoichiometric ratio of the NASICON-type solid-state electrolyte K_{1.3}Mg_{0.3}Zr_{1.7}(SeO₄)₃: an A source material KNO₃, a B source material SeO₂, an M source material Mg(NO₃)₂, and an N source material ZrSO₄; and an alkali metal activator K₂C₂O₄ is weighed.
   The D₅₀ particle size of K₂C₂O₄ was 100 nm. The molar ratio of the NASICON-type solid-state electrolyte K_{1.3}Mg_{0.3}Zr_{1.7}(SeO₄)₃ to K₂C₂O₄ was [1:2].
(2) In a nitrogen atmosphere, the raw materials and the alkali metal activator which were weighed in step (1) were fed into a high-speed disperser with a stirring speed of 3000 rpm in order from the largest to the smallest particle size and mixed thoroughly to obtain a mixed material, where the materials were stirred for 30 min after each feeding, and after the final feeding, the materials were stirred for 2 hours.
(3) The mixed material was evenly dispersed and spread in a crucible, and the crucible was then placed in a high-temperature furnace for first high-temperature sintering treatment in a nitrogen atmosphere, where the mixed material was heated to 600°C at a heating rate of 1°C/min and held at the temperature for 6 hours; then, the sintered material was cooled to room temperature at a cooling rate of 3°C/min to obtain an intermediate material.
(4) In a nitrogen atmosphere, the intermediate material was crushed and dispersed in a double roll crusher and then mixed evenly to obtain a precursor material with a D₅₀ particle size of 100 nm.
(5) The precursor material was evenly dispersed and spread in a crucible, and the crucible was placed in a high-temperature furnace for second sintering treatment in a nitrogen atmosphere, where the precursor material was heated to 500°C at a heating rate of 1°C/min and held at the temperature for 4 hours; then, the sintered material was cooled to room temperature at a cooling rate of 2°C/min, and then crushed and sieved to obtain an off-white novel alkali metal-rich NASICON-type solid-state electrolyte K_{5.3}Mg_{0.3}Zr_{1.7}(SeO₄)₃ with a D₅₀ particle size of 100 nm.

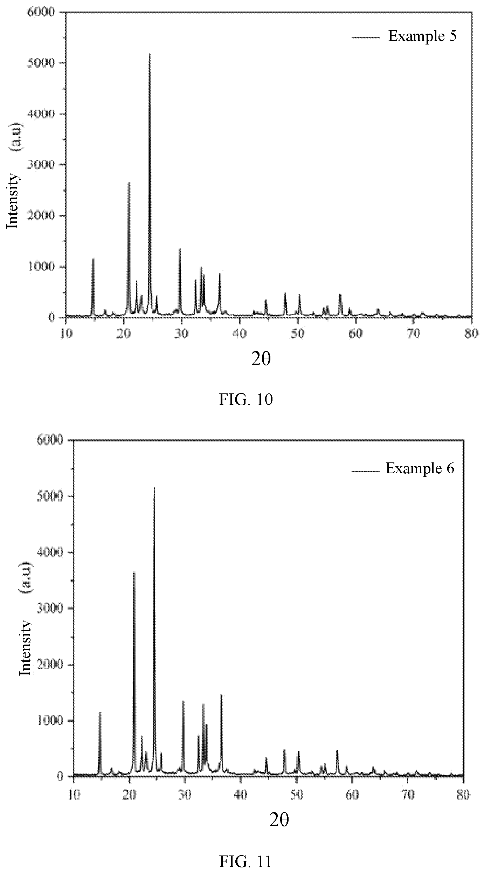

The XRD pattern of the novel alkali metal-rich NASICON-type solid-state electrolyte K_{5.3}Mg_{0.3}Zr_{1.7}(SeO₄)₃ prepared in this example is as shown in FIG. 10. X-ray diffraction (XRD) measurements were performed using a Cu-Kα target, revealing diffraction peaks at diffraction angles 2θ=20.6°, 22.4°, 23.2°, and 24.7°, characteristic peaks at diffraction angles 2θ=33.3°, 33.5° and 36.7°, and a weak impurity peak around 34°.

A potassium-ion all-solid-state battery was assembled using the novel alkali metal-rich NASICON-type solid-state electrolyte K_{5.3}Mg_{0.3}Zr_{1.7}(SeO₄)₃ prepared in this example via a conventional method. The battery configuration consisted of a potassium cobalt oxide as a negative active material for preparation of an positive electrode, metallic potassium as an negative electrode, and the novel alkali metal-rich NASICON-type solid-state electrolyte K_{5.3}Mg_{0.3}Zr_{1.7}(SeO₄)₃ as an electrolyte layer. Test conditions: charge-discharge current of 0.1 A/g, charge cut-off voltage of 4.2 V, and discharge cut-off voltage of 2 V. Detailed test data are summarized in Table 1.

### Embodiment6

This embodimentprovides the preparation process and performance test of a novel alkali metal-rich NASICON-type solid-state electrolyte, and the specific preparation process is as follows.
(1) The following raw materials were weighed in a stoichiometric ratio of the NASICON-type solid-state electrolyte Na₃Al_{0.3}Ti_{1.7}(SiO₄)₃: an A source material NaClO₄, a B source material SiH₄, an M source material Al(OH)₃, and an N source material Ti(NO₃)₄; and an alkali metal activator CH₂COONa was weighed.
   The D₅₀ particle size of CH₂COONa was 10 µm. The molar ratio of the NASICON-type solid-state electrolyte Na₃Al_{0.3}Ti_{1.7}(PO₄)₃ to CH₂COONa was [1:6.5].
(2) In a nitrogen atmosphere, the raw materials and the alkali metal activator which were weighed in step (1) were fed into a high-speed disperser with a stirring speed of 3000 rpm in order from the largest to the smallest particle size and mixed evenly to obtain a mixed material, where the materials were stirred for 30 min after each feeding, and after the final feeding, the materials were stirred for 2 hours.
(3) The mixed material was evenly dispersed and spread in a crucible, and the crucible was then placed in a high-temperature furnace for first high-temperature sintering treatment in a nitrogen atmosphere, where the mixed material was heated to 600°C at a heating rate of 1°C/min and held at the temperature for 6 hours; then, the sintered material was cooled to room temperature at a cooling rate of 3°C/min to obtain an intermediate material.
(4) In a nitrogen atmosphere, the intermediate material was crushed and dispersed in a double roll crusher and then mixed thoroughly to obtain a precursor material with a D₅₀ particle size of 100 nm.
(5) The precursor material was evenly dispersed and spread in a crucible, and the crucible was placed in a high-temperature furnace for second sintering treatment in a nitrogen atmosphere, where the precursor material was heated to 500°C at a heating rate of 1°C/min and held at the temperature for 4 hours; then, the sintered material was cooled to room temperature at a cooling rate of 2°C/min, and then crushed and sieved to obtain an off-white novel alkali metal-rich NASICON-type solid-state electrolyte Na_{9.5}Al_{0.3}Ti_{1.7}(SiO₄)₃ with a D₅₀ particle size of 100 nm.

The XRD pattern of the novel alkali metal-rich NASICON-type solid-state electrolyte Na_{9.5}Al_{0.3}Ti_{1.7}(SiO₄)₃ prepared in this embodimentis as shown in FIG. 11. X-ray diffraction (XRD) measurements were performed using a Cu-Kα target, revealing diffraction peaks at diffraction angles 20 = 20.9°, 22.4°, 22.8°, and 24.3°, characteristic peaks at diffraction angles 20 = 33.5°, 33.7° and 36.8°, and a weak impurity peak around 34°.

A sodium-ion all-solid-state battery was assembled using the novel alkali metal-rich NASICON-type solid-state electrolyte Na_{9.5}Al_{0.3}Ti_{1.7}(SiO₄)₃ prepared in this embodimentvia a conventional method. The battery configuration consisted of a sodium nickel cobalt manganese oxide (NCM) as a positive active material for preparation of an positive electrode , a metallic sodium sheet as an negative electroden, and the novel alkali metal-rich NASICON-type solid-state electrolyte Na_{9.5}Al_{0.3}Tl_{1.7}(SiO₄)₃ as an electrolyte layer. Test conditions: charge-discharge current of 0.1 A/g, charge cut-off voltage of 4.2 V, and discharge cut-off voltage of 2 V. Detailed test data are summarized in Table 1.

To better illustrate the effects of the examples of the present invention, Comparative Example 1 is compared with Example 1 above, Comparative Example 2 is compared with the Example 5 above, and Comparative Example 3 is compared with Example 6 above.

### Comparative Example 1

Lithium aluminum titanium phosphate Li_{1.3}Al_{0.3}Ti_{1.7}(PO₄)₃(LATP), the pristine NASICON-type solid-state electrolyte in embodiment1, was used as Comparative Example 1 and its XRD pattern is as shown in FIG. 3. It can be observed that the diffraction peaks of the pristine NASICON-type solid-state electrolyte Li_{1.3}Al_{0.3}Ti_{1.7}(PO₄)₃(LATP) in Comparative Example 1 differ from those of the novel alkali metal-rich NASICON-type solid-state electrolyte prepared in embodiment1, indicating that the crystal structure of the novel alkali metal-rich NASICON-type solid-state electrolyte is distinct from that of the NASICON-type solid-state electrolyte LATP. The solid-state electrolyte prepared in the present invention is a novel solid-state electrolyte which has a crystal structure similar to but not identical to that of the NASICON-type solid-state electrolyte.

An all-solid-state battery was assembled using LATP and tested in the same way as embodiment1. The electrochemical impedance spectroscopy (EIS) plot of the assembled lithium-ion all-solid-state batteries is as shown in FIG. 5. It can be seen that the impedance of the battery assembled in embodiment1 is lower than that of the battery in Comparative Example 1, demonstrating that compared with the original NASICON-type solid-state electrolyte LATP in Comparative Example 1, the novel alkali metal-rich NASICON-type solid-state electrolyte prepared in embodiment1 can significantly reduce the interface impedance during the electrochemical reactions of batteries, thereby inhibiting the occurrence of interface side reactions. Detailed test data of the lithium-ion all-solid-state battery assembled in this comparative example are summarized in Table 1.

### Comparative Example 2

The pristine NASICON-type solid-state electrolyte K_{1.3}Mg_{0.3}Zr_{1.7}(SeO₄)₃ in embodiment5 was used as Comparative Example 2 to assemble a potassium-ion all-solid-state battery for testing, with the testing method same as that of Example 5. Detailed test data of the assembled potassium-ion all-solid-state battery are summarized in Table 1.

### Comparative Example 3

The pristine NASICON-type solid-state electrolyte Na₃Al_{0.3}Ti_{1.7}(SiO₄)₃ in embodiment6 was used as Comparative Example 3 to assemble a sodium-ion all-solid-state battery for testing, with the testing method same as that of embodiment6. Detailed test data of the assembled sodium-ion all-solid-state battery are summarized in Table 1.

**Table 1 summarizes the test data of batteries assembled in embodiments 1-6 and Comparative Examples 1-3 as follows:**

| No. | Ionic Conductivity (S/cm) | AC Impedance (Ω) | Cycle Capacity Retention Rate after 500 Cycles (%) |
|---|---|---|---|
| embodiment1 | 7.63×10⁻³ | 17 | 87 |
| embodiment2 | 5.94×10⁻³ | 34 | 83 |
| embodiment3 | 4.23×10⁻³ | 45 | 86 |
| embodiment4 | 4.63×10⁻³ | 36 | 82 |
| embodiment5 | 5.07×10⁻³ | 42 | 89 |
| embodiment6 | 6.11×10⁻³ | 47 | 84 |
| Comparative Example 1 | 6.71×10⁻⁴ | 131 | 76 |
| Comparative Example 2 | 4.32×10⁻⁴ | 195 | 71 |
| Comparative Example 3 | 7.36×10⁻⁴ | 247 | 78 |

As can be seen from the comparison of the test data in Table 1, the ionic conductivity, AC impedance, and cycle capacity retention rate after 500 cycles of the lithium-ion all-solid-state battery in embodiment1 are all superior to those of the battery in Comparative Example 1. Similarly, the potassium-ion all-solid-state battery in embodiment5 outperforms that in Comparative Example 2, and the sodium-ion all-solid-state battery in embodiment6 is also superior to that in Comparative Example 3. This is because the batteries assembled in the embodimentsof the present invention comprise novel alkali metal-rich NASICON-type solid-state electrolytes, which can significantly reduce the interface impedance of the batteries, improve the transport efficiency of carriers, and enhance the cycle stability of the batteries.

The specific embodiments described above further explain the objectives, technical solutions and beneficial effects of the present invention in detail. It should be understood that the above are only specific embodiments of the present invention and are not used to limit the scope of the present invention. Any modifications, equivalent substitutions, improvements, etc. made within the spirit and principles of the present invention should be included within the scope of the present invention.

## Claims

1. A novel alkali metal-rich NASICON-type solid-state electrolyte, wherein the novel alkali metal-rich NASICON-type solid-state electrolyte has a chemical general formula of A_{1+x+y}MₓN₂₋ₓ(BO₄)₃, where 0≤x≤3, and 0≤y≤26; A is any one of elements Li, Na, K, Mg, and Ca; B is one or more of elements B, P, Si, S, Se, As, and Te; M is one or more of elements Al, Ga, Cd, Mn, Co, Ni, Zn, Fe, Sc, Cr, In, Y, and Ln; and N is one or more of Ti, Sn, Ge, Zr, Hf, V, Nb, Ta, and Sb;
the novel alkali metal-rich NASICON-type solid-state electrolyte is obtained by adding an alkali metal activator with a D₅₀ particle size of 1 nm to 10 µm during a preparation process to react with other raw materials;
the alkali-metal activator comprises any one of a lithium activator, a sodium activator or a potassium activator;
the lithium activator comprises one or more of: LiH, Li₂S, Li₂SO₄, C₂H₅LiO, CH₃LiO, Li₂C₂O₄, a mixture of lithium-aromatic hydrocarbon-ether solvents, LiClO₄, LiSO, LiAlSO, and LiBF₄; the mixture of lithium-aromatic hydrocarbon-ether solvents comprises one or more of: a lithium-biphenyl-glyme mixture, a lithium-biphenyl-tetrahydrofuran mixture, a lithium-naphthalene-tetrahydrofuran mixture, and a lithium-naphthalene-dioxolane mixture;
the sodium activator comprises one or more of: NaH, Na₂O, Na₂O₂, Na₂S, NaOH, Na₂CO₃, CH₃COONa, Na₂SO₄, NaCl, NaF, Na₃PO₄, C₂H₃NaO, CH₃NaO, Na₂C₂O₄, a mixture of sodium-aromatic hydrocarbon-ether solvents, NaAlSO, NaTFSI and NaFSI; the mixture of sodium-aromatic hydrocarbon-ether solvents comprises one or more of: a sodium-naphthalene-tetrahydrofuran mixture, a sodium-naphthalene-dioxolane mixture, a sodium-naphthalene-tetrahydrofuran mixture, and a sodium-biphenyl-tetrahydrofuran mixture;
the potassium activator comprises one or more of: KH, K₂O, K₂O₂, K₂S, KOH, K₂CO₃, KF, K₃PO₄, C₂H₅KO, CH₃KO, K₂C₂O₄, a mixture of potassium-aromatic hydrocarbon-ether solvents, KPF₆, KClO₄, KSO, KAlSO, KBF₄, KTFSI and KFSI; the mixture of potassium-aromatic hydrocarbon-ether solvents comprises one or more of: a potassium-naphthalene-tetrahydrofuran mixture, a potassium-naphthalene-dioxolane mixture, a potassium-biphenyl-glyme mixture, and a potassium-biphenyl-tetrahydrofuran mixture;
X-ray diffraction (XRD) measurements were performed by using a Cu-Kα targetfor the novel alkali metal-rich NASICON-type solid-state electrolyte, having diffraction peaks at diffraction angles 2θ=20.8±0.5°22.2±0.5°, 23±0.5°, and 24.5±0.5°; two weak diffraction peaks appear at diffraction angles 20 between 21.7° and 23.5 °, three characteristic peaks are present at diffraction angles 2θ=33.3±0.5°, 33.8±0.5°and 36.5±0.5° between 32° and 37 °, and a weak impurity peak is observed around 34°;
the intensities of the diffraction peaks at diffraction angles 2θ=20.8±0.5°, 22.2±0.5°, 23±0.5°, 24.5±0.5° , 33.3±0.5°, 33.8±0.5°, and 36.5±0.5° are sequentially denoted as I₁, I₂, I₃, I₄, I₅, I₆, and I₇, wherein a peak intensity ratio of I₁:I₄ is between 0.1:1 and 1:1, a peak intensity ratio of I₂:I₃ is between 0.1:1 and 2:1, a peak intensity of I₅:I₆ is between 1:2 and 2:1, and a peak intensity of I₅:I₇ is between 1:2 and 2:1;
a main crystal structure of the novel alkali metal-rich NASICON-type solid-state electrolyte belongs to Pmnb space group and P-43n space group, of which the Pmnb space group is the dominant one.

2. The novel alkali metal-rich NASICON-type solid-state electrolyte according to claim 1, wherein when x=0.3 or x=0.5, 0.5≤y≤26.

3. The novel alkali metal-rich NASICON-type solid-state electrolyte according to claim 1, wherein the novel alkali metal-rich NASICON-type solid-state electrolyte presents an off-white powder appearance, with lightness L in a Lab color space satisfying 0≤ L<15.

4. A preparation method for the novel alkali metal-rich NASICON-type solid-state electrolyte according to any one of claims 1 to 3, wherein the preparation method comprises:
weighing raw materials in a stoichiometric ratio of the NASICON-type solid-state electrolyte: an A source material, a B source material, an M source material, and an N source material; and weighing an alkali metal activator;
in a protective atmosphere, feeding the raw materials and the alkali metal activator with a D₅₀ particle size of 1 nm to 10 µm into a mixer in order from the largest to the smallest particle size and mixing thoroughly to obtain a mixed material;
evenly dispersing and spreading the mixed material in a crucible, and then placing the crucible in a high-temperature furnace for first high-temperature sintering treatment in a protective atmosphere, and cooling to room temperature for the first time to obtain an intermediate material;
in a protective atmosphere, crushing and dispersing the intermediate material in a pulverizer and mixing evenly to obtain a precursor material; and
evenly dispersing and spreading the precursor material in a crucible, placing the crucible in a high-temperature furnace for second sintering treatment in a protective atmosphere, and then cooling to room temperature for the second time, and crushing and sieving a resulting material to obtain the novel alkali metal-rich NASICON-type solid-state electrolyte;
the A source material comprises one or more of: Li₂O, Li₂O₂, LiOH, Li₂CO₃, CH₃COOLi, LiNO₃, LiPF₆, LiAsF₆, LiBF₄, LiFSI, LiTFSI, LiCF₃SO₃, LiCF₃SO₃·LiOAc, LiC₂H₃O₂, LiCl, LiF, Li₃PO₄, lithium bis-oxalate borate (LiBOB), lithium difluoro-oxalate borate (LiDFOB), Li₂B₄O₇, NaPF₆, NaClO₄, NaAlClh, NaFeClh, NaSO, NaBF₄, NaNO₃, NaPOFA, KCl, KNO₃, KH₂PO₄, K₂SO₄, and CH₃COOK;
the B source material comprises one or more of: H₂PO₄, NH₂H₂PO₄, (NH₂)₂HPO₄, SiO₂, SiH₄, CH₃SiH₃, CS₂, P₂S₃, SeO₂, and CdSe;
the M source material comprises one or more of: Al₂O₃, Al(OH)₃, AlOOH, Al₂(CO₃)₃, C₉H₂₁AlO₃, Al(NO₃)₃·9H₂O, Al[OOCH₃(OH)₂]·xH₂O, GaCl₃, GaBr₃, GaI₃, Ga(NO₃)₃, and Ga₂(SO₄)₃;
the N source material comprises one or more of: TiCl₄, Ti(NO₃)₄, isobutyl titanate (IPT), dibutyl titanate (DBTDP), tetrabutyl titanate (TBT), C₁₆H₃₆O₄Ti, Ti(n-C₃H₇O)₄, Ti(OC₄H₉)₄, ZrO₂, ZrSiO₄, ZrSO₄, ZrOCl₂, ZrC, ZrCO₃, ZrB, and ZrB₂;
the alkali-metal activator comprises any one of a lithium activator, a sodium activator or a potassium activator; the lithium activator comprises one or more of: LiH, Li₂S, Li₂SO₄, C₂H₅LiO, CH₃LiO, Li₂C₂O₄, a mixture of lithium-aromatic hydrocarbon-ether solvents, LiClO₄, LiSO, LiAlSO, and LiBF₄; the mixture of lithium-aromatic hydrocarbon-ether solvents comprises one or more of: a lithium-biphenyl-glyme mixture, a lithium-biphenyl-tetrahydrofuran mixture, a lithium-naphthalene-tetrahydrofuran mixture, and a lithium-naphthalene-dioxolane mixture;
the sodium activator comprises one or more of: NaH, Na₂O, Na₂O₂, Na₂S, NaOH, Na₂CO₃, CH₃COONa, Na₂SO₄, NaCl, NaF, Na₃PO₄, C₂H₃NaO, CH₃NaO, Na₂C₂O₄, a mixture of sodium-aromatic hydrocarbon-ether solvents, NaAlSO, NaTFSI and NaFSI; the mixture of sodium-aromatic hydrocarbon-ether solvents comprises one or more of: a sodium-naphthalene-tetrahydrofuran mixture, a sodium-naphthalene-dioxolane mixture, a sodium-naphthalene-tetrahydrofuran mixture, and a sodium-biphenyl-tetrahydrofuran mixture;
the potassium activator comprises one or more of: KH, K₂O, K₂O₂, K₂S, KOH, K₂CO₃, KF, K₃PO₄, C₂H₅KO, CH₃KO, K₂C₂O₄, a mixture of potassium-aromatic hydrocarbon-ether solvents, KPF₆, KClO₄, KSO, KAlSO, KBF₄, KNO₃, KTFSI, and KFSI; the mixture of potassium-aromatic hydrocarbon-ether solvents comprises one or more of: a potassium-naphthalene-tetrahydrofuran mixture, a potassium-naphthalene-dioxolane mixture, a potassium-biphenyl-glyme mixture, and a potassium-biphenyl-tetrahydrofuran mixture;
the conditions for the first high-temperature sintering treatment are: heating to a temperature between 500°C and 850°C at a heating rate of 1°C/min to 3°C/min, and holding the temperature for 4 h to 7 h; the conditions for the second sintering treatment are: heating to a temperature between 300°C and 650°C at a heating rate of 1°C/min to 3°C/min, and holding the temperature for 2 hours to 6 hours.

5. The preparation method according to claim 4, wherein the alkali metal activator has a D₅₀ particle size of 1 nm to 10 µm; a molar ratio of the NASICON-type solid-state electrolyte to the alkali metal activator is within a range of [1:0.5] to [1:6.5].

6. The preparation method according to claim 4, wherein the protective atmospheres comprise one or more of nitrogen, argon and hydrogen;
the mixer is a high-speed disperser, with a stirring speed ranging from 1500 rpm to 5000 rpm; the mixing evenly includes: stirring for 20 min to 60 min after each feeding, and after the final feeding, stirring for 1 hour to 3 hours;
the cooling to room temperature for the first time and the cooling to room temperature for the second time are both performed at a cooling rate of 1°C/min to 5°C/min.

7. A use of the novel alkali metal-rich NASICON-type solid-state electrolyte according to any one of claims 1 to 3,, wherein the novel alkali metal-rich NASICON-type solid-state electrolyte is used in one or more of an electrolyte, a separator, a positive material additive, an negative material additive, and an electrolyte additive.

8. A secondary battery, comprising one or more of the electrolyte, separator, cathode material additive, anode material additive, and electrolyte additive according to claim 7.

9. The secondary battery according to claim 8, wherein the secondary battery comprises any one of a lithium-ion battery, a sodium-ion battery and a potassium-ion battery.
